(19) Europäisches Patentamt
European Patent Office
Office européen des brevets

(11) **EP 2 846 455 A1**

(12) **EUROPEAN PATENT APPLICATION**

(43) Date of publication:
**11.03.2015 Bulletin 2015/11**

(51) Int Cl.:
**H02P 21/14** $^{(2006.01)}$

(21) Application number: **13183332.9**

(22) Date of filing: **06.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Technology AG**
**8050 Zürich (CH)**

(72) Inventors:
• **Al-Hokayem, Peter**
**5405 Baden (CH)**
• **Stulz, Christian**
**5300 Turgi (CH)**

(74) Representative: **ABB Patent Attorneys**
**c/o ABB Schweiz AG**
**Intellectual Property CH-IP**
**Brown Boveri Strasse 6**
**5400 Baden (CH)**

(54) **Method and apparatus for estimating a stator flux in an electrical induction machine**

(57) The present invention relates to a method for estimating a stator flux ($\ddot{\psi}_s(t)$) of an electrical induction machine (2) in an actual calculation cycle, comprising the steps of:
- applying a discrete physical voltage machine model; and
- correcting an estimated stator flux ($\ddot{\psi}_s(t)$) with a correction term;
wherein the correction term corresponds to a function of a stator current estimation error ($i_s(t) - \hat{i}_s(t)$).

Fig. 1

EP 2 846 455 A1

**Description**

**Technical field**

The present invention relates to electrical induction machines, such as asynchronous motors, and in particular to methods for determining the actual flux in the electrical induction machine.

**Prior art**

Electrical quantities, such as a flux, are required for implementing control mechanisms used for driving electrical induction machines. The control mechanisms generally determine a desired torque and corresponding input phase voltages required to achieve the desired torque. The input phase voltages are applied to stator windings of the induction machine in order to operate the induction machine and hence affect the actual fluxes, actual currents, electrical torque and rotational speed.

The basis for control mechanisms to be applied for electrical induction machines is the availability of the actual value of the flux.

The flux in an electrical induction machine can be calculated using a voltage model of the machine, including an integration of a term using the actual stator voltage, the actual stator current and the stator winding resistance. In practice, however, physical models including integrations tend to be unstable, in particular for low frequencies. Further approaches for estimating the flux in an electrical induction machine require numerical differentiation, a process that introduces noise into the system and deteriorates performance.

Document EP 847 617 B1 discloses a flux vector angle correction method for rotating electrical machine models, wherein the correction method uses field and torque current components of the stator current vector of the rotating electrical machine. The field current component is raised until the machine is operating in the saturation range. Stator voltage vector components are detected and converted to flux-oriented voltage components, wherein the constant components are eliminated and a correlation vector is formed using the resulting voltage components. An angle of the model flux vector is determined from one component of the correlation vector and is adjusted until the respective component is zero.

Document US 6,683,428 B2 discloses a method for computing the rotor flux vector, wherein a rotor flux observer is defined and the rotor flux vector is computed using flux orientation and estimated stator current and stator voltage.

Document EP 127 158 B discloses a method for calculating a flux vector for a three-phase rotating machine, wherein an EMF vector is derived from a measured stator current and stator voltage. The EMF vector is modified by a feedback signal obtained from the calculated flux vector, and the modified EMF vector is integrated to obtain the flux vector.

Document GB 2260823 B discloses a method for determining a stator flux of an asynchronous machine, wherein two stator flux estimates are determined based on separate parameters to calculate a correction term.

**Summary of the invention**

It is an object to provide a method for estimating the stator flux of an electrical induction machine, the method having an increased robustness with respect to disturbances and a guaranteed exponential stability.

This object has been achieved by the method for estimating a stator flux of an electrical induction machine according to claim 1 and the estimator device and motor system according to the further independent claims.

Further embodiments are indicated in the depending subclaims.

According to a first aspect, a method for estimating a stator flux of an electrical induction machine in an actual calculation cycle is provided, comprising the steps of:

- applying a discrete physical voltage machine model; and
- correcting an estimated stator flux with a correction term;
  wherein the correction term corresponds to a function of a stator current estimation error.

Furthermore, an uncorrected stator flux is obtained by applying the discrete physical voltage machine model, wherein the uncorrected stator flux is corrected by the correction term to obtain the estimated stator flux.

A control unit that is controlling and/or operating an electrical induction machine requires a reliable estimation mechanism for the actual stator flux. As the stator flux is a physical quantity that is not directly measurable, it has to be estimated. This is performed by using a physical model, such as the machine voltage model, which requires an integration that renders a direct estimation unstable and the control based thereon unrobust.

The basic idea of the above method is to employ a physical machine voltage model estimating the stator flux based on an estimated stator flux of a previous cycle using a correction term which is dependent on a stator current estimation error. This allows for utilizing a correlation between the flux estimation error of the estimated flux and a current estimation error of an estimated stator current. In other words, the estimated stator current depends on the estimated stator flux, so that the stator current estimation error as a difference between the actual measured current and the estimated current can be treated as an indication of the flux estimation error as a difference between the actual stator flux and the estimated stator flux of a previous calculation cycle. Hence, the stator current estimation error indicating the difference of the actual measured current and the actual estimated current can be fed back to calculate the estimated flux by means of a potentially time-varying gain.

It may be provided that the stator current estimation error is a difference between a measured stator current and an estimated stator current.

In particular, the estimated stator current is obtained by a discrete physical current machine model.

The discrete physical voltage machine model may describe a stator flux difference between the actual calculation cycle and a previous calculation cycle depending on an actual stator current and an actual stator voltage.

Moreover, the correction term may depend on a time-varying gain matrix which is designed such that the norm of a resulting flux estimation error as a difference between the actual stator flux and an estimated stator flux converges to zero.

It may be provided that the gain matrix corresponds to a general form of

$$K(t-1) \triangleq \begin{bmatrix} \alpha(t-1) & -\beta(t-1) \\ \beta(t-1) & \alpha(t-1) \end{bmatrix}$$

In particular, the gain matrix may correspond to

$$K \ (t-1) \triangleq p \left[ \frac{T_s}{\sigma L_s} \left( \frac{R_r}{L_r} I - \omega(t-1) J \right) \right]^{-1} \quad \text{for} \quad 0 < p < 1,$$

wherein p is selected to achieve an exponential convergence to zero.

Alternatively, the gain matrix may correspond to

$$K \ (t-1) \triangleq p(t-1) \left[ \frac{T_s}{\sigma L_s} \frac{R_r}{L_r} \right]^{-1} J \quad \text{for} \quad 0 < p < 1,$$

wherein p is selected to achieve an exponential convergence to zero.

According to a further aspect, an estimator for use in a motor system is provided, wherein the estimator is configured to estimate a stator flux of an asynchronous electrical machine in an actual calculation cycle by applying a discrete physical voltage machine model and by correcting an estimated stator flux with a correction term, wherein the correction term corresponds to a function of a stator current estimation error.

According to a further aspect, a motor control device is provided, comprising:

- a control unit for performing a control by means of an indication of an actual stator flux used to generate phase voltages to apply to an electrical induction machine; and
- the above estimator, wherein the estimated stator flux is provided as the indication of an actual stator flux.

According to a further aspect, a motor system is provided, comprising:

- an electrical induction machine; and
- the above motor control device.

**Brief description of the drawings**

Embodiments of the present invention are described in more detail in conjunction with the accompanying drawings, in which:

Figure 1    shows a block diagram of a motor system having a controlled asynchronous motor and a control unit for controlling the motor based on an estimated stator flux; and

Figure 2    shows a more detailed block diagram of the estimator of the motor system of Figure 1.

**Detailed description**

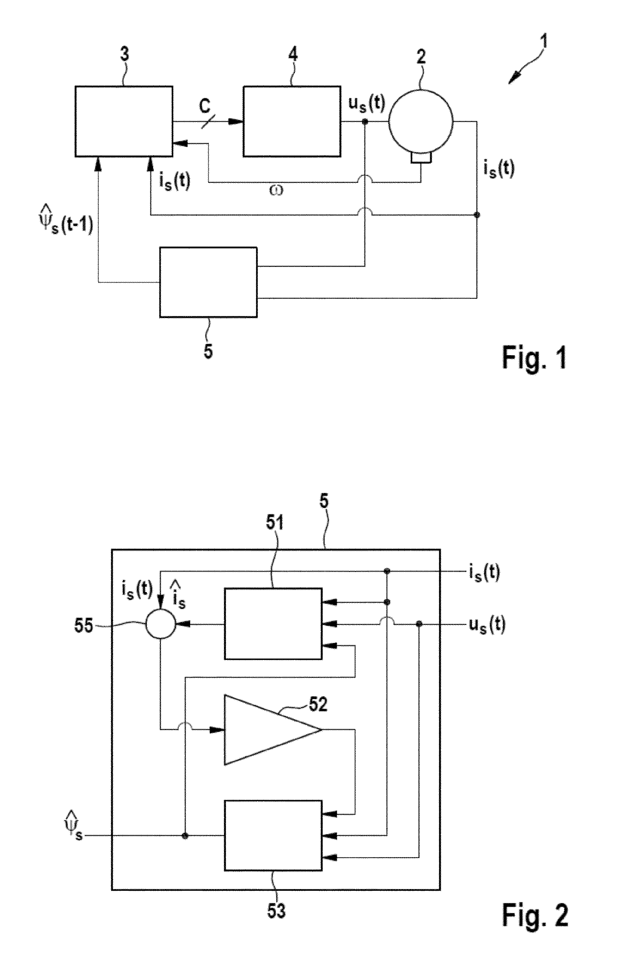

Figure 1 shows a block diagram of a motor system 1 having an asynchronous machine 2 controlled by a control unit 3. The asynchronous machine 2 (electrical induction machine) is a multiphase AC-driven electrical machine in which a rotor magnet field is generated by an electrical current in the rotor which is induced by electromagnetic induction from a magnetic field of the stator winding. By way of example, the asynchronous machine 2 of the present embodiment has three phases.

The control unit 3 provides control signals C to an inverter unit 4 which generates corresponding phase voltages to apply to the stator winding of the asynchronous machine 2. The phase voltages result in a resulting stator voltage $u_s(t)$ which is derived from the phase voltages and an indication of which is supplied to an estimator 5. At the stator windings, further motor currents are measured from which a stator current $i_s(t)$ is also supplied to the estimator 5. From the resulting stator voltage $u_s(t)$ and the stator current $i_s(t)$ the current stator flux $\psi_s(t)$ is estimated. It is understood that the estimator 5 is initially supplied with machine parameters before start of calculation.

The control of the asynchronous motor 2 is carried out by the control unit 3 which uses indications of the actual stator flux $\psi_s(t)$, the stator currents $i_s(t)$ and the rotational speed $\omega$ for performing a control depending on a provided control goal, such as a desired torque, desired rotational speed, desired rotor position and the like.

The estimator 5 substantially uses a machine voltage model and a machine current model in its discrete form. The machine voltage model given in a fixed xy frame of reference is as follows:

$$\frac{d\psi_s}{dt} = -R_s i_s + u_s.$$

The machine current model reads as follows:

$$\frac{di_s}{dt} = -(\mu I - \omega J)i_s + \frac{1}{\sigma L_s}\left(\frac{R_r}{L_r}I - \omega J\right)\psi_s + \frac{1}{\sigma L_s}u_s,$$

where $i_s(t)$, $\omega$, $u_s(t)$ und $\psi_s$ correspond to the stator current, the rotational frequency, the stator voltage and stator flux, respectively.

$$\mu = \frac{R_s L_r + R_r L_s}{L_r L_s - L_m^2}$$

$$\sigma = 1 - \frac{L_m^2}{L_r L_s}$$

$$I = \begin{bmatrix} 1 & 0 \\ 0 & 1 \end{bmatrix}$$

$$J = \begin{bmatrix} 0 & -1 \\ 1 & 0 \end{bmatrix}$$

It is further assumed that all machine parameters are known, wherein $R_s$ is the stator resistance, $L_s$ is the stator inductance, $R_r$ is the rotor resistance, $L_r$ is the rotor inductance and $L_m$ is the main inductance.

The discrete time approximation of the above-mentioned model giving the sampling time $T_s$ is:

$$\psi_s(t) = \psi_s(t-1) - T_s R_s i_s(t-1) + T_s u_s(t-1)$$

$$i_s(t) = \big((1 - T_s\mu)I - T_s\omega(t-1)J\big)i_s(t-1)$$

$$+ \frac{T_s}{\sigma L_s}\left(\frac{R_r}{L_r}I - \omega(t-1)J\right)\psi_s(t-1) + \frac{T_s}{\sigma L_s}u_s(t-1)$$

Although, on the one hand, the stator current $i_s(t)$ can be measured, it can also be estimated as $\widehat{i_s}(t)$, given by:

$$\widehat{i_s}(t) = \frac{T_s}{\sigma L_s}\left(\frac{R_r}{l_r}I - \omega(t-1)J\right)\widehat{\psi}_s(t-1) + \big((1 - T_s\mu)I - T_s\omega(t-1)J\big)i_s(t-1)$$

$$+ \frac{T_s}{\sigma L_s}u_s(t-1)$$

The estimated stator current $\widehat{i_s}(t)$ depends on the estimated stator flux $\widehat{\psi}_s(t-1)$ of a previous calculation cycle. Consequently, the stator current estimation error $i_s(t) - \widehat{i_s}(t)$, which corresponds to the difference between the actual stator current $i_s(t)$ and the estimated stator current $\widehat{i_s}(t)$, indicates the deviation of the estimated flux $\widehat{\psi}_s(t-1)$ in the previous calculation cycle from the actual state of flux as follows:

$$i_s(t) - \widehat{i_s}(t) = \frac{T_s}{\sigma L_s}\left(\frac{R_r}{L_r}I - \omega(t-1)J\right)(\psi_s(t-1) - \widehat{\psi}_s(t-1))$$

With reference to Figure 2, where the estimator 5 is illustrated in more detail, the estimated stator current $\widehat{i_s}(t)$ is calculated in the current estimation block 51 of the estimator 5, and the difference between the measured stator current

$i_s(t)$ and the estimated stator current $\widehat{i_s}(t)$ is obtained by a difference block 55 and provided to a gain block 52 by which the current estimation error $i_s(t) - \widehat{i_s}(t)$ of the difference between the measured stator current $i_s(t)$ and the estimated stator current $\widehat{i_s}(t)$ is treated by a potentially time-varying gain K(t-1) and fed to a flux estimation block 53 which estimates the actual flux $\hat{\psi}_s(t)$ using the machine voltage model based on an estimated flux $\hat{\psi}_s(t-1)$ in the previous calculation cycle and a correction term, as follows:

$$\hat{\psi}_s(t) = \hat{\psi}_s(t-1) - T_s R_s i_s(t-1) + T_s u_s(t-1) + \underbrace{K(t-1)(i_s(t) - \widehat{i_s}(t))}_{correction\ term}$$

The choice of the time-varying control gains K can be selected from a broad variety of possible time-varying and time-invariant gains. However, the control gains K now have chosen that the flux estimation error $\psi_s(t) - \hat{\psi}_s(t)$ converges to zero exponentially fast, e. g. there exist constants c > 0 and 0 < r < 1, so that

$$\left\| \psi_s(t) - \hat{\psi}_s(t) \right\| \le c \cdot r^t$$

for any finite initial value $\hat{\psi}_s(0)$ of the estimator 5.
In general, it has been found that preferred candidate matrix gain K follows following form:

$$K(t-1) = \begin{bmatrix} \alpha(t-1) & -\beta(t-1) \\ \beta(t-1) & \alpha(t-1) \end{bmatrix}$$

As a first option, the candidate matrix gain K can be selected as follows:

$$K_1(t-1) \triangleq p \left[ \frac{T_s}{\sigma L_s} \left( \frac{R_r}{L_r} I - \omega(t-1) J \right) \right]^{-1}, \ 0 < p < 1.$$

The corresponding flux estimation error e(t) is given by

$$e(t) \triangleq \psi_s(t) - \hat{\psi}_s(t)$$

$$= e(t-1) + K(t-1)\left(i_s(t) - \widehat{i_s}(t)\right)$$

$$= \left( 1 - K(t-1)\frac{T_s}{\sigma L_s} \left( \frac{R_r}{L_r} I - \omega(t-1) J \right) \right) e(t-1)$$

$$= (1-p)e(t-1)$$

$$= (1-p)^t e(0).$$

Therefore, the norm of the error can be bound as follows:

$$\|e(t)\| = \|(1-p)^t e(0)\| = (1-p)^t \|e(0)\|,$$

from which it can be deduced that the norm of the error converges to zero exponentially fast, as previously required.

As a second option, which applies to cases where the rotational speed is not exactly known, the control gain K can be selected as follows:

$$K_2(t-1) \triangleq p(t-1)\left[\frac{T_s}{\sigma L_s}\frac{R_r}{L_r}\right]^{-1} J, \ 0 < p < 1.$$

The corresponding flux estimation error $e(t) = \psi_s(t) - \hat{\psi}_s(t)$ is given by:

$$e(t) = \left(I - p(t-1)\left[\frac{T_s}{\sigma L_s}\frac{R_r}{L_r}\right]^{-1} J \frac{T_s}{\sigma L_s}\left(\frac{R_r}{L_r}I - \omega(t-1)J\right)\right)e(t-1)$$

$$= \left(I - p(t-1)J\left(I - \frac{L_r}{R_r}\omega(t-1)J\right)\right)e(t-1)$$

$$= \left(\underbrace{\left(1 - p(t-1)\frac{L_r}{R_r}\omega(t-1)\right)}_{\triangleq\alpha(t-1)}I - p(t-1)J\right)e(t-1)$$

$$= \begin{bmatrix} \alpha(t-1) & p(t-1) \\ -p(t-1) & \alpha(t-1) \end{bmatrix}e(t-1).$$

Therefore, the closed loop matrix can be decomposed as follows:

$$A_{cl}(t-1) = \begin{bmatrix} \alpha(t-1) & p(t-1) \\ -p(t-1) & \alpha(t-1) \end{bmatrix}$$

$$= T\begin{bmatrix} \alpha(t-1) + jp(t-1) & 0 \\ 0 & \alpha(t-1) - jp(t-1) \end{bmatrix}T^{-1}$$

where

$$T = \begin{bmatrix} 1 & 1 \\ j & -j \end{bmatrix}$$

which is time-independent. Given a certain robustness margin $\varepsilon \in (0,1)$ to be satisfied by the closed loop eigenvalues:

$$|\alpha(t-1) \pm jp(t-1)| \leq 1 - \epsilon$$

$$\Leftrightarrow \alpha(t-1)^2 + p(t-1)^2 \leq (1-\epsilon)^2$$

$$\Leftrightarrow \left(1 + \left(\frac{L_r}{R_r}\omega(t-1)\right)^2\right)p(t-1)^2 - 2\frac{L_r}{R_r}\omega(t-1)p(t-1) + 1 \leq (1-\epsilon)^2.$$

The last inequality can be satisfied for choice of

$$p(t-1) \in \frac{\frac{L_r}{R_r}\omega(t-1)+[-1,1]\cdot\sqrt{\left(\frac{L_r}{R_r}\omega(t-1)\right)^2(1-\epsilon)^2-\epsilon(2-\epsilon)}}{1+\left(\frac{L_r}{R_r}\omega(t-1)\right)^2}.$$

For such choice of the gain factor *p*, it can be shown that

$$\|e(t)\| = \left\|\prod_{i=0}^{t-1} A_{cl}(i)e(0)\right\| \leq \left\|\prod_{i=0}^{t-1} A_{cl}(i)e(0)\right\|\|e(0)\|$$

$$= \left\|T\left(\prod_{i=0}^{t-1}\begin{bmatrix} \alpha(t-1)+jp(t-1) & 0 \\ 0 & \alpha(t-1)-jp(t-1)\end{bmatrix}\right)T^{-1}\right\|\|e(0)\| \leq (1-\epsilon)^t\|e(0)\|$$

yielding exponential stability, as previously required.

The proposed estimation scheme for estimating the stator flux $\hat{\psi}_s(t)$ provides an additional robustness with respect to additive disturbances. If, for example, there is a constant bias in the measured stator voltage $u_s(t)$, i. e.

$$\widehat{u_s}(t) = u_s(t) + \Delta,$$

wherein the biased stator voltage $\widehat{u_s}(t)$ is used in the estimator 5, it can be shown that the norm of the estimation error $\|e(0)\|$ converges exponentially to a certain bounded value that depends on the magnitude of the bias signal $\Delta$, i. e. there exists a time T > 0 and a constant $\kappa$, so that

$$\|e(t)\| < \kappa, \forall t \geq T.$$

**Reference list**

1     motor system

2     electrical induction machine

3      control unit

4      inverter unit

5      estimator

51     current estimation block

52     gain block

53     flux estimation block

55     difference block

**Claims**

1.  Method for estimating a stator flux ($\overset{\wedge}{\psi}_s(t)$) of an electrical induction machine (2) in an actual calculation cycle, comprising the steps of:

    - applying a discrete physical voltage machine model; and
    - correcting an estimated stator flux ($\overset{\wedge}{\psi}_s(t)$) with a correction term; wherein the correction term corresponds to a function of a stator current estimation error $\left(i_s(t) - \widehat{\imath}_s(t)\right)$.

2.  Method according to claim 1, wherein by applying the discrete physical voltage machine model an uncorrected stator flux is obtained, wherein the uncorrected stator flux is corrected by the correction term to obtain the estimated stator flux ($\overset{\wedge}{\psi}_s(t)$).

3.  Method according to claim 1 or 2, wherein the stator current estimation error $\left(i_s(t) - \widehat{\imath}_s(t)\right)$ is a difference between a measured stator current ($i_s(t)$) and an estimated stator current $\left(\widehat{\imath}_s(t)\right)$.

4.  Method according to claim 3, wherein the estimated stator current $\left(\widehat{\imath}_s(t)\right)$ is obtained by a discrete physical current machine model.

5.  Method according to any one of claims 1 to 4, wherein the discrete physical voltage machine model describes a stator flux difference between the actual calculation cycle and a previous calculation cycle depending on an actual stator current ($i_s(t)$) and an actual stator voltage ($u_s(t)$).

6.  Method according to any one of claims 1 to 5, wherein the correction term depends on a time-varying gain matrix which is designed such that the norm of a resulting flux estimation error ($e(t)$) as a difference between the actual stator flux ($\psi_s(t)$) and an estimated stator flux ($\overset{\wedge}{\psi}_s(t)$) converges to zero.

7.  Method according to claim 6, wherein the gain matrix corresponds to a general form of

$$K(t-1) \triangleq \begin{bmatrix} \alpha(t-1) & -\beta(t-1) \\ \beta(t-1) & \alpha(t-1) \end{bmatrix}$$

8.  Method according to claim 6 or 7, wherein the gain matrix corresponds to

$K(t-1) \triangleq p\left[\frac{T_s}{\sigma L_s}\left(\frac{R_r}{L_r}I - \omega(t-1)J\right)\right]^{-1}$ for 0 < p < 1, wherein p is selected to achieve an exponential convergence to zero.

9. Method according to claim 6 or 7, wherein the gain matrix corresponds to

$$K \ (t-1) \triangleq p(t-1)\left[\frac{T_s}{\sigma L_s}\frac{R_r}{L_r}\right]^{-1} J \quad \text{for } 0 < p < 1, \text{ wherein p is selected to achieve an exponential conver-}$$

gence to zero.

10. Estimator (5) for use in a motor system (1), wherein the estimator (5) is configured to estimate a stator flux ($\hat{\psi}_s(t)$) of an asynchronous electrical machine (2) in an actual calculation cycle by applying a discrete physical voltage machine model and by correcting an estimated stator flux ($\hat{\psi}_s(t)$) with a correction term, wherein the correction term corresponds to a function of a stator current estimation error $(i_s(t) - \hat{i}_s(t))$.

11. Motor control device, comprising:

- a control unit (3) for performing a control by means of an indication of an actual stator flux ($\hat{\psi}_s(t)$) used to generate phase voltages to apply to an electrical induction machine (2); and
- the estimator (5) according to claim 9, wherein the estimated stator flux ($\hat{\psi}_s(t-1)$) is provided as the indication of an actual stator flux ($\psi_s(t)$).

12. Motor system (1), comprising:

- an electrical induction machine (2);
- a motor control device according to claim 11.

**Fig. 1**

**Fig. 2**

Europäisches
Patentamt

European
Patent Office

Office européen
des brevets

# EUROPEAN SEARCH REPORT

Application Number

EP 13 18 3332

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOLTZ J: "Sensorless control of induction motors - performance and limitations", INDUSTRIAL ELECTRONICS, 2000. ISIE 2000. PROCEEDINGS OF THE 2000 IEEE INTERNATIONAL SYMPOSIUM ON DEC. 4-8, 2000, PISCATAWAY, NJ, USA,IEEE, vol. 1, 4 December 2000 (2000-12-04), pages PL12-PL20, XP010548048, ISBN: 978-0-7803-6606-0 * paragraph [03.3] - paragraph [03.4] * | 1-12 | INV. H02P21/14 |
| X | US 2003/015988 A1 (GIUSEPPE GUIDI [JP]) 23 January 2003 (2003-01-23) * paragraphs [0014], [84to91] * | 1-12 | |
| A,D | GB 2 260 823 A (ABB STROEMBERG DRIVES OY [FI]) 28 April 1993 (1993-04-28) * the whole document * | 1-12 | |
| A,D | EP 0 127 158 A1 (SIEMENS AG [DE]) 5 December 1984 (1984-12-05) * the whole document * | 1-12 | |
| A,D | US 6 683 428 B2 (PAVLOV ALEXEI [NL] ET AL) 27 January 2004 (2004-01-27) * the whole document * | 1-12 | TECHNICAL FIELDS SEARCHED (IPC) H02P |
| A,D | EP 0 847 617 B1 (SIEMENS AG [DE]) 24 January 2001 (2001-01-24) * the whole document * | 1-12 | |

The present search report has been drawn up for all claims

| Place of search | Date of completion of the search | Examiner |
|---|---|---|
| Munich | 26 March 2014 | Closa, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 18 3332

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2014

| Patent document cited in search report | | Publication date | Patent family member(s) | | Publication date |
|---|---|---|---|---|---|
| US 2003015988 | A1 | 23-01-2003 | CN | 1383260 A | 04-12-2002 |
| | | | DE | 10133710 A1 | 28-05-2003 |
| | | | JP | 4411796 B2 | 10-02-2010 |
| | | | JP | 2002330600 A | 15-11-2002 |
| | | | US | 2003015988 A1 | 23-01-2003 |
| GB 2260823 | A | 28-04-1993 | DE | 4235607 A1 | 29-04-1993 |
| | | | FI | 915051 A | 26-04-1993 |
| | | | FR | 2683104 A1 | 30-04-1993 |
| | | | GB | 2260823 A | 28-04-1993 |
| | | | IT | 1257165 B | 05-01-1996 |
| | | | JP | 2582990 B2 | 19-02-1997 |
| | | | JP | H05284776 A | 29-10-1993 |
| | | | US | 5371458 A | 06-12-1994 |
| EP 0127158 | A1 | 05-12-1984 | EP | 0127158 A1 | 05-12-1984 |
| | | | IN | 164784 A1 | 03-06-1989 |
| | | | US | 4593240 A | 03-06-1986 |
| US 6683428 | B2 | 27-01-2004 | DE | 10303301 A1 | 07-08-2003 |
| | | | GB | 2385219 A | 13-08-2003 |
| | | | JP | 2003235300 A | 22-08-2003 |
| | | | US | 2003146723 A1 | 07-08-2003 |
| EP 0847617 | B1 | 24-01-2001 | AT | 198964 T | 15-02-2001 |
| | | | CN | 1193422 A | 16-09-1998 |
| | | | DE | 19532149 A1 | 06-03-1997 |
| | | | EP | 0847617 A1 | 17-06-1998 |
| | | | US | 5936377 A | 10-08-1999 |
| | | | WO | 9708820 A1 | 06-03-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 847617 B1
- US 6683428 B2
- EP 127158 B
- GB 2260823 B